# DEMANDE DE BREVET EUROPEEN

(11) **EP 3 358 493 A1**
(43) Date de publication de la demande: **08.08.2018**
(21) Numéro de dépôt: 18154118.6
(22) Date de dépôt: 30.01.2018
(51) Int. Cl.: G06F 21/77, G06Q 20/34

(54) **PROCÉDÉ POUR LA SÉCURITÉ D'UNE OPÉRATION ÉLECTRONIQUE**

(30) Priorité: 02.02.2017 FR 1750876
(71) Demandeur: Idemia France, 92700 Colombes (FR)
(72) Inventeur: Chamberot, Francis, 92700 Colombes (FR); De Oliveira, Marco, 92700 Colombes (FR)
(74) Mandataire: Gevers Patents

(57) **Abrégé**

La présente invention concerne un procédé pour aider à améliorer la sécurité d'une opération électronique réalisée via un élément sécurisé (3). Le procédé comprend les étapes suivantes. Une première application (1) de l'élément sécurisé (3) est sélectionnée (101) et écrit (102) une donnée de contexte (11) dans des moyens d'enregistrement (31) de l'élément sécurisé (3). Ensuite, une deuxième application (2) est sélectionnée (201), lit la donnée de contexte (11) dans les moyens d'enregistrement (31) et vérifie (203) si la donnée de contexte (11) satisfait à une condition prédéfinie. Si oui, il est considéré que le contexte de la sélection (201) de la deuxième application (2) est légitime et l'opération électronique peut se poursuivre normalement.

## Description

### Domaine technique

Selon un premier aspect, la présente invention concerne un procédé pour aider à améliorer la sécurité d'une opération électronique. Selon un deuxième aspect, la présente invention concerne un élément sécurisé comprenant des moyens d'exécution informatique pour mettre en oeuvre le procédé. Selon un troisième aspect, l'invention propose un programme informatique comprenant des instructions pour l'exécution des étapes du procédé. Selon un quatrième aspect, l'invention propose un support d'enregistrement lisible par des moyens d'exécution informatique et sur lequel sont enregistrées des instructions pour l'exécution des étapes du procédé.

### Art antérieur

Il est connu d'utiliser un élément sécurisé, par exemple une carte à puce, pour effectuer une authentification lors d'une opération électronique. Par exemple, un tel élément sécurisé peut être utilisé pour s'authentifier auprès d'un portique de sécurité pour qu'il s'ouvre automatiquement, pour signer un document électroniquement par identification ou pour s'authentifier pour qu'une transaction bancaire soit réalisée.

Un problème est qu'il est possible à un malfaiteur d'utiliser l'élément sécurisé à l'insu de son utilisateur légitime pour réaliser des opérations électroniques non-voulues par celui-ci. Dans les transports en commun par exemple, un malfrat peut approcher un lecteur de carte sans contact d'un élément sécurisé et lui faire faire des opérations électroniques de paiement sans que l'utilisateur légitime ne s'en aperçoive. Il est aussi possible qu'une opération électronique de paiement frauduleuse profite du fait qu'un utilisateur signe un document électroniquement grâce à son élément sécurisé.

Il est donc important d'améliorer la sécurité des opérations électroniques réalisées avec un élément sécurisé.

Le document WO2016/097650 divulgue des exemples d'actions pour améliorer la sécurité d'opérations électroniques.

### Résumé de l'invention

L'invention a pour but d'améliorer la sécurité d'une opération électronique réalisée à l'aide d'un élément sécurisé grâce à la prise en compte d'une information concernant le contexte dans lequel se déroule l'opération électronique.

A cet effet, selon un premier aspect, l'invention propose un procédé pour aider à améliorer la sécurité d'une opération électronique, ledit procédé étant mis en oeuvre par un élément sécurisé comprenant des moyens d'enregistrement stockant des instructions pour l'exécution d'une première application et d'une deuxième application différente de la première application, ledit procédé comprenant les étapes successives suivantes:
(a) une première sélection de la première application,
(b) une écriture, par la première application, d'une première donnée dans lesdits moyens d'enregistrement,
(c) une sélection de la deuxième application,
(d) une lecture, par la deuxième application, de ladite première donnée dans lesdits moyens d'enregistrement,
(e) une vérification, par la deuxième application, que ladite première donnée satisfait à une condition prédéfinie, et
(f) si ladite première donnée satisfait à ladite condition prédéfinie, une réalisation, par la deuxième application, de ladite opération électronique qui comprend la génération d'une donnée d'authentification à partir d'une clé stockée dans lesdits moyens d'enregistrement.

Dans le procédé selon l'invention, la première donnée fournit à la deuxième application une information provenant de la première application, c'est-à-dire une information concernant un usage précédent de l'élément sécurisé. Cela permet de fournir à la deuxième application une information sur le contexte dans lequel elle est sélectionnée. Ensuite, par la vérification de la condition prédéfinie, la deuxième application juge, en fonction de cette information de contexte, de la légitimité de l'opération électronique qu'elle est censée exécuter. L'opération électronique a lieu si la légitimé de l'opération électronique est jugée suffisante sur base de cette information de contexte, c'est-à-dire sur base de la première donnée. La première application et la deuxième application sont des applications différentes l'une de l'autre.

La première donnée peut aussi être appelée "information de contexte", "information contextuelle" ou "donnée de contexte".

Le procédé selon l'invention peut être utilisé pour améliorer la sécurité de toute opération électronique qui comprend la génération d'une donnée d'authentification à partir d'une clé. Cela peut par exemple servir pour une opération électronique relative à l'ouverture d'un portique de sécurité ou à un paiement bancaire.

De préférence l'élément sécurisé est un dispositif électronique capable de faire tourner des applications et de stocker des données confidentielles chiffrées de façon sécurisée.

L'élément sécurisé comprend des moyens d'exécution informatique. L'élément sécurisé est de préférence conforme à la norme ISO7816 ou ISO14443. De préférence, l'élément sécurisé a passé une certification sécuritaire EMV.

L'élément sécurisé peut, par exemple, fonctionner notamment selon le protocole EMV (Europay Mastercard Visa) qui est un protocole standard international de sécurité des cartes de paiement. Le protocole EMV permet de diminuer les risques de fraude en permettant notamment l'authentification de l'élément sécurisé et de son porteur. L'élément sécurisé est préférentiellement conçue pour communiquer avec un dispositif électronique externe dénommé terminal ou lecteur. L'élément sécurisé est de préférence un dispositif électronique portable ou compris dans un dispositif électronique portable. Par exemple, l'élément sécurisé peut être soudé à une carte de circuit imprimé d'un dispositif électronique portable.

L'élément sécurisé peut être, ou être compris dans, une carte à puce, aussi appelée carte à microcircuit. La carte à puce est de préférence conforme à la norme ISO7816.

L'élément sécurisé peut être, ou être compris dans, un dispositif électronique portable de type téléphone, smartphone ou tablette. Dans un mode de réalisation de l'invention, un dispositif électronique portable qui comprend l'élément sécurisé comprend aussi des moyens de mise en oeuvre de la technologie de communication en champ proche.

Dans le cadre du présent document, une "opération électronique", qui peut être aussi appelée "transaction électronique" comprend une pluralité d'étapes mises en oeuvre par l'élément sécurisé et potentiellement un ou plusieurs autres dispositif(s) électronique(s). Une de ces étapes est une génération d'une donnée d'authentification à partir d'une clé stockée dans des moyens d'enregistrement de l'élément sécurisé. La donnée d'authentification comprend de préférence un cryptogramme de sécurisation.

De préférence, la sélection de la deuxième application implique la fermeture de la première application. En effet, en général, un élément sécurisé n'a pas les ressources nécessaires pour faire tourner deux applications en même temps. La sélection d'une application peut par exemple se faire via une commande select selon le protocole APDU.

Dans le cadre du présent document, une donnée est une donnée digitale et une information est une information digitale.

Dans un mode de réalisation de l'invention, la deuxième application comprend une instruction de lecture pointant vers la première donnée dans les moyens d'enregistrement.

De préférence, les applications sont indépendantes l'une de l'autre et le procédé selon l'invention est l'unique lien entre elles.

De préférence, la première donnée comprend une information temporelle.

Dans un mode de réalisation de l'invention, la première donnée comprend un moyen pour identifier la première application.

Dans un mode de réalisation, une pluralité de données est écrite par la première application lors de l'étape (b) et lue par la deuxième application lors de l'étape (d). La vérification de l'étape (e) peut porter sur une ou plusieurs données de cette pluralité. Cela permet par exemple qu'une première donnée de cette pluralité soit une information temporelle et une deuxième donnée de cette pluralité soit une donnée permettant d'identifier la première application.

La génération de la donnée d'authentification comprend de préférence que l'élément sécurisé détermine, sur base d'une clé stockée dans ses moyens d'enregistrement et potentiellement d'une donnée aléatoire, une donnée d'authentification. Cette détermination peut nécessiter la saisie d'un code secret parfois appelé code PIN. Dans un mode de réalisation de l'invention, une fois que la donnée d'authentification est générée, l'élément sécurisé l'envoie à un deuxième dispositif électronique, par exemple à une entité de vérification.

Dans un mode de réalisation de l'invention, la donnée d'authentification est vérifiée par l'entité de vérification et si la vérification de la donnée d'authentification est réussie, la suite de l'opération électronique se poursuit normalement. Par exemple, si l'opération électronique concerne un paiement celui-ci peut avoir lieu normalement.

Dans un mode de réalisation de l'invention, la donnée d'authentification est une signature électronique.

Dans le cadre du présent document, une "application" est un logiciel fonctionnant sur un élément sécurisé.

Les moyens d'enregistrement sont de préférence sécurisés. Les moyens d'enregistrement peuvent comprendre plusieurs mémoires. En particulier, les moyens d'enregistrement peuvent comprendre une première mémoire et une deuxième mémoire. La première mémoire est de préférence une mémoire non-volatile, qui peut être réinscriptible ou pas. La première mémoire est de préférence de type ROM ou flash. La première mémoire comprend de préférence au moins une partie des instructions relatives à la première et à la deuxième applications. La deuxième mémoire est de préférence une mémoire non-volatile réinscriptible. Par exemple, la deuxième mémoire peut être de type EEPROM ou flash. La première donnée est de préférence écrite dans la deuxième mémoire.

Dans un mode de réalisation de l'invention, si la première donnée ne satisfait pas à la condition prédéfinie, l'élément sécurisé prend une contremesure. La contremesure peut être, par exemple, que l'élément sécurisé envoie à un deuxième dispositif électronique une information de sécurité dépendant de la première donnée. La contremesure peut être, par exemple, que l'opération électronique doit être effectuée en ligne. La contremesure peut être, par exemple, que l'opération électronique est refusée, ce qui empêche les étapes suivantes de l'opération électronique. La contremesure peut être, par exemple, que la deuxième application est bloquée. Dans ce cas, seule une commande spécifique peut débloquer l'application. La contremesure peut être, par exemple, que toute opération électronique sans contact avec l'élément sécurisé devient interdite, seules les opérations électroniques avec contact restent autorisées. La contremesure peut être, par exemple, de bloquer l'élément sécurisé de façon réversible ou irréversible. La contremesure peut être, par exemple, d'effacer le contenu d'au moins une partie des moyens d'enregistrement de l'élément sécurisé. La contremesure peut par exemple comprendre que l'élément sécurisé envoie une information de sécurité à une entité de vérification qui, en retour, empêche l'opération électronique de s'exécuter hors ligne.

Selon un mode de réalisation de l'invention, ladite condition prédéfinie est une condition temporelle.

Une sélection légitime de la deuxième application peut être peu probable juste après la sélection de la première application. Par exemple, il est peu probable de vouloir effectuer un paiement juste après avoir franchi un portique d'entrée. Ce mode de réalisation de l'invention est particulièrement intéressant lorsque la première donnée comprend une information temporelle.

Selon un mode de réalisation de l'invention, ladite condition prédéfinie est que l'intervalle temporel entre la première sélection de la première application et la sélection de la deuxième application soit plus grand qu'une durée prédéterminée.

Un exemple est le suivant. La première donnée est le temps (par exemple seconde, minute, heure et jour) de la première sélection de la première application. La condition prédéfinie est que la différence entre la première donnée et le temps de la sélection de la deuxième application est au-dessus d'un certain seuil.

Selon un mode de réalisation de l'invention, la première sélection de la première application est liée à une opération électronique correspondant à une entrée dans une entité, et ladite condition prédéfinie est que ladite première sélection de la première application ait été suivie dans le temps d'une deuxième sélection de la première application qui est liée à une opération électronique correspondant à une sortie de ladite entité.

L'entité peut être, par exemple, un espace comme un réseau de transport en commun, un bâtiment ou un ensemble de bâtiments. De préférence, l'entrée est alors une entrée physique de l'utilisateur de l'élément sécurisé dans cet espace et la sortie est alors une sortie physique de l'utilisateur de cet espace. L'espace est de préférence géographiquement délimité.

L'entité peut être, par exemple, une entité informatique comme un logiciel ou un site internet. De préférence, l'entrée est alors une connexion (log in) à une session sur cette entité informatique et la sortie est une déconnexion (log out) de la session.

La première donnée peut par exemple être une donnée binaire qui est mise égale 1 à chaque entrée dans l'entité et à 0 à chaque sortie de l'entité. La condition prédéfinie est alors satisfaite si la première donnée est égale à 0 car cela signifie que l'entrée a été suivie d'une sortie.

Il est aussi possible que la première donnée soit la différence entre le temps de la dernière sortie et le temps de la dernière entrée. La condition prédéfinie est alors satisfaite si cette différence est positive et n'est pas satisfaite si cette différence est négative ou est indéterminée.

Cela permet par exemple d'éviter toute opération électronique de paiement dans un réseau de transport en commun.

Selon un mode de réalisation de l'invention, si, lors de l'étape (e), ladite première donnée ne satisfait pas à ladite condition prédéfinie, la deuxième application détermine une information de sécurité et l'envoie à un deuxième dispositif électronique.

Le deuxième dispositif électronique est un dispositif électronique extérieur à la carte puce. C'est par exemple un lecteur de l'élément sécurisé ou une entité de vérification apte à vérifier la donnée d'authentification. La détermination de l'information de sécurité peut par exemple se faire dans le cadre du protocole EMV lors d'une étape de Card Risk Management (gestion des risques de carte).

Selon un mode de réalisation de l'invention, la sélection de la deuxième application est réalisée par une technologie de communication sans contact, par exemple une technologie de communication en champ proche.

Les technologies de communication sans contact sont particulièrement sujettes à des fraudes où l'élément sécurisé est utilisé à l'insu de son utilisateur légitime. Il est donc particulièrement intéressant d'utiliser le procédé selon l'invention pour sécuriser les opérations électroniques sans contact. Un exemple d'une telle technologie est la technologie de communication en champ proche appelée aussi NFC pour Near Field Communication.

Selon un mode de réalisation de l'invention, si, lors de l'étape (e), ladite première donnée ne satisfait pas à ladite condition prédéfinie, la deuxième application force ladite opération électronique à être effectuée via une technologie de communication avec contact.

Cela permet de s'assurer que l'utilisateur légitime de l'élément sécurisé est au courant de l'opération électronique.

Selon un mode de réalisation de l'invention, un premier espace mémoire desdits moyens d'enregistrement correspond à la première application, une deuxième espace mémoire desdits moyens d'enregistrement, différent du premier espace mémoire, correspond à la deuxième application, et lorsque la deuxième application lit ladite première donnée lors de l'étape (d), elle la lit dans le premier espace mémoire.

Cela permet que la première application soit une application standard, qui ne doive pas être modifiée pour mettre en oeuvre le procédé selon l'invention.

Dans le cadre du présent document, un "espace mémoire" peut comprendre une pluralité de fichiers, en particulier une pluralité de fichiers d'un même fichier répertoire. Un fichier répertoire peut être appelé de son nom anglais "directory file".

Selon un mode de réalisation de l'invention, le premier espace mémoire est un fichier répertoire de la première application et le deuxième espace mémoire est un fichier répertoire de la deuxième application.

Cela correspond à une architecture d'applications de type "système de fichiers ISO 7816-4" qui est une architecture d'applications souvent employée dans les cartes à puce.

Selon un mode de réalisation de l'invention, la première application est une première applet, la deuxième application est une deuxième applet, le premier espace mémoire est dédié à la première applet et le deuxième espace mémoire est dédié à la deuxième applet.

Cela correspond à une architecture d'applications de type plateforme JAVA qui est une autre architecture d'applications souvent employée dans les cartes à puce.

Selon un mode de réalisation de l'invention, la première application est une application pour l'accès à un réseau de transports en commun.

En effet, les fraudes avec des cartes à puce sont courantes dans les transports en commun. Le procédé selon l'invention peut par exemple être mis en oeuvre sur un élément sécurisé ayant une première application pour l'accès aux transports en commun et une deuxième application pour des paiements électroniques.

Dans le cadre du présent document, un "accès à un réseau de transport en commun" comprend de préférence un pointage d'entrée dans ledit réseau. Il peut aussi comprendre, mais pas nécessairement, l'ouverture d'une porte dudit réseau.

Selon un mode de réalisation de l'invention, l'étape (b) est déclenchée par pointage d'entrée dans ledit réseau de transport en commun.

De préférence, les étapes (a) et l'étapes (b) sont déclenchées par un pointage d'entrée dans le réseau de transport en commun.

Le pointage d'entrée peut par exemple comprendre une validation d'un ticket logiciel présent sur l'élément sécurisé.

Selon un mode de réalisation de l'invention, ledit pointage d'entrée résulte en une ouverture d'un portique d'entrée.

Selon un mode de réalisation de l'invention, la première application est une application d'identification.

Une application d'identification permet d'identifier quelqu'un sur base de son élément sécurisé. Cette application d'identification permet en général de signer des documents de façon électronique. Cela peut par exemple se faire avec une carte d'identité électronique comme celle utilisée en Belgique, une carte du citoyen ou un passeport électronique.

Selon un mode de réalisation de l'invention, la deuxième application est une application de paiement électronique.

Selon un mode de réalisation de l'invention, la génération d'une donnée d'authentification comprend une détermination d'un cryptogramme de paiement.

De préférence, la donnée d'authentification forme alors le cryptogramme de paiement. Le cryptogramme de paiement est un cryptogramme de sécurisation employé pour une opération électronique de paiement.

Selon un mode de réalisation de l'invention, l'élément sécurisé est compris dans une carte à puce ou un téléphone portable.

Selon un deuxième aspect, l'invention propose un élément sécurisé comprenant des moyens d'exécution informatique pour mettre en oeuvre le procédé selon l'un des modes de réalisation de l'invention. L'invention se rapporte aussi à tout dispositif électronique comprenant ledit élément sécurisé.

Ces moyens d'exécution informatique peuvent par exemple comprendre un microprocesseur de l'élément sécurisé.

Selon un troisième aspect, l'invention propose un programme informatique comprenant des instructions pour l'exécution des étapes du procédé selon l'un des modes de réalisation de l'invention lorsque ledit programme informatique est exécuté par un élément sécurisé.

Selon un quatrième aspect, l'invention propose un support d'enregistrement lisible par des moyens d'exécution informatique et sur lequel sont enregistrées des instructions pour l'exécution des étapes du procédé selon l'un des modes de réalisation de l'invention.

Ce support d'enregistrement peut comprendre ou au moins être partiellement compris dans les moyens d'enregistrement de l'élément sécurisé.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre un système informatique pour la mise en oeuvre d'un mode de réalisation de l'invention,
- la figure 2 représente, de manière schématique, l'architecture matérielle d'un élément sécurisé conforme à un mode de réalisation de l'invention,
- la figure 3 illustre schématiquement des moyens d'enregistrement utilisés dans un mode de réalisation de l'invention, et
- la figure 4 illustre schématiquement un procédé pour aider à améliorer la sécurité d'une opération électronique selon un mode de réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier », « deuxième » ou « dernier » servent uniquement à différencier les différents éléments et n'impliquent pas d'ordre entre ces éléments.

Sur les figures, les éléments identiques ou analogues peuvent porter les mêmes références.

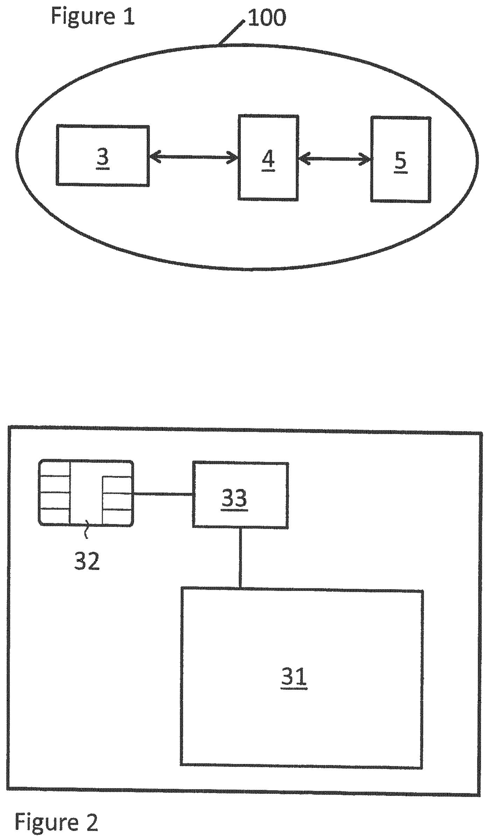

La figure 1 illustre un système informatique 100 pour la mise en oeuvre d'un mode de réalisation de l'invention. Le système informatique comprend un élément sécurisé 3 en communication électronique avec un lecteur 4, lui-même en communication électronique avec une entité de vérification 5. L'entité de vérification 5 est un "deuxième dispositif électronique". L'élément sécurisé 3 peut être, par exemple, une carte à puce.

Lorsque l'élément sécurisé 3 est connecté au lecteur 4 pour réaliser une opération électronique, cette dernière peut avoir lieu en ligne ou hors ligne. Si elle a lieu en ligne, cela signifie que le lecteur 4 est en communication avec l'entité de vérification 5 lorsque l'élément sécurisé 3 est en communication avec le lecteur 4. Ainsi, une donnée d'authentification peut être envoyée directement à l'entité de vérification 5. L'entité de vérification 5 peut directement vérifier la donnée d'authentification et si la vérification est réussie, l'entité de vérification 5 peut autoriser l'opération électronique. Si l'opération électronique a lieu hors ligne, le lecteur 4 applique lui-même des critères de vérification déterminés pour décider si l'opération électronique en cours est autorisée. Une opération électronique en ligne est donc plus sécurisée qu'une opération électronique hors ligne.

Le lecteur 4 peut être, par exemple, un terminal d'un réseau de transport en commun, un terminal de paiement ou un périphérique connectable à un ordinateur. La connexion entre le lecteur 4 et l'élément sécurisé 3 peut être avec contact ou sans contact.

La figure 2 représente, de manière schématique, l'architecture matérielle d'un élément sécurisé 3 conforme à un mode de réalisation de l'invention. L'élément sécurisé 3 est, dans cet exemple, une carte à puce EMV conforme à la norme ISO 7816.

Plus particulièrement, l'élément sécurisé 3 comprend ici un microprocesseur 33 couplé à des contacts externes 32 (ports d'entrées/sorties) et à des moyens d'enregistrement 31.

On considère ici que les moyens d'enregistrement 31 sont sécurisés en faisant appel à un mécanisme de sécurité classique bien connu de l'homme du métier et qui ne sera donc pas décrit ici.

Les contacts externes 32 constituent ici un module d'interface permettant à l'élément sécurisé 3 (et plus particulièrement au microprocesseur 33) d'établir une communication, par contact dans cet exemple, avec une entité externe telle que lecteur 4. On comprendra que d'autres types de module d'interface peuvent toutefois être envisagés comme un module d'interface permettant d'établir une communication sans contact (comportant une antenne radiofréquence par exemple) entre l'élément sécurisé 3 et le lecteur 4.

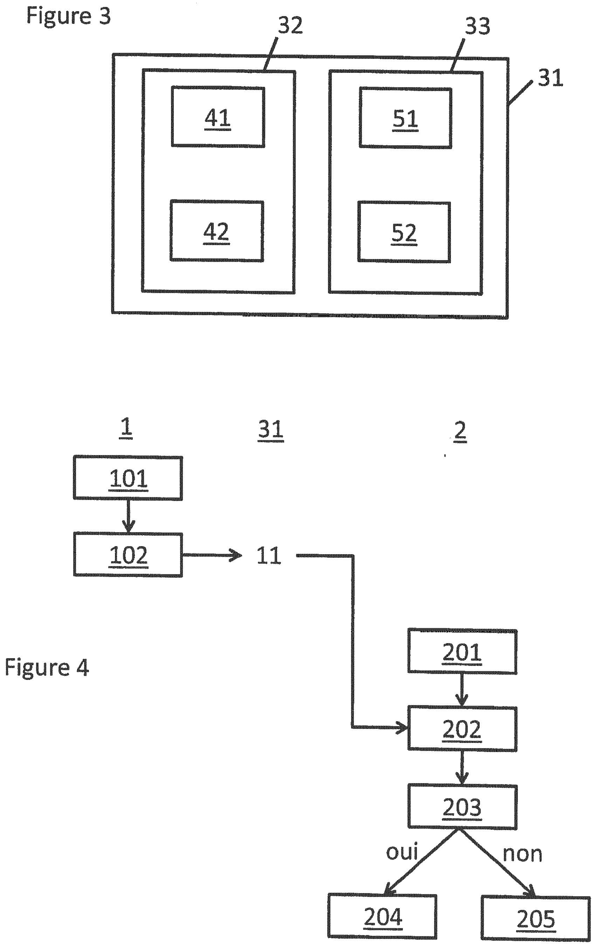

La figure 3 illustre schématiquement des moyens d'enregistrement 31 utilisés dans un mode de réalisation de l'invention.

Les moyens d'enregistrements 31 stockent des instructions 41 pour une première application 1 et des instructions 42 pour une deuxième application 2, de préférence dans une première mémoire 32 non-volatile, qui peut être par exemple de type flash ou ROM. Les moyens d'enregistrements 31 stockent des données 51 pour la première application 1 et des données 52 pour la deuxième application 2, de préférence dans une deuxième mémoire 33, qui peut être par exemple de type EEPROM ou flash.

En d'autres termes, les moyens d'enregistrements 31 comprennent un premier espace mémoire correspondant à la première application 1 et comprenant les instructions 41 pour la première application 1 et les données 51 pour la première application 1; et les moyens d'enregistrements 31 comprennent un deuxième espace mémoire correspondant à la deuxième application 2 et comprenant les instructions 42 pour la deuxième application 2 et les données 52 pour la deuxième application 2. Le premier espace mémoire peut être dit "dédié" à la première application 1. Le deuxième espace mémoire peut être dit "dédié" à la deuxième application 1.

Lors de la réalisation du procédé selon l'invention, les moyens d'enregistrements 31 sont en outre amenés à stocker une première donnée 11 (non-représentée ici). En particulier, la première donnée 11 est préférentiellement stockée dans la deuxième mémoire 33. Elle est plus préférentiellement stockée dans la partie du premier espace mémoire qui comprend les données 51 pour la première application 1. Elle est de préférence stockée dans une mémoire apte à être réécrite des centaines de fois, par exemple une EEPROM.

La figure 4 illustre schématiquement un procédé pour aider à améliorer la sécurité d'une opération électronique selon un mode de réalisation de l'invention. Le procédé est mis en oeuvre grâce à la première application 1 et la deuxième application 2. De préférence, le procédé se déroule de la façon suivante. La première application 1 est sélectionnée 101. Elle écrit 102 une première donnée 11 dans les moyens d'enregistrement 31. Elle peut aussi réaliser diverses étapes qui ne sont pas nécessaires au procédé selon l'invention. Par exemple, elle peut générer une première donnée d'authentification à partir d'une première clé stockée dans les moyens d'enregistrement.

La deuxième application 2 est sélectionnée 201. La deuxième application 2 est, de préférence, l'application pour mettre en oeuvre l'opération électronique dont on désire améliorer la sécurité. La deuxième application 2 lit 202 la première donnée 11 dans les moyens d'enregistrement 31. Elle vérifie 203 que la première donnée 11 satisfait à une condition prédéfinie. Si oui, elle réalise 204 l'opération électronique comme prévu. Cela comprend notamment que la deuxième application 2 génère une donnée d'authentification sur base d'une clé stockée dans les moyens d'enregistrement 31. De préférence, si la première donnée 11 ne satisfait pas à la condition prédéfinie, la deuxième application prend 205 une contremesure qui améliore la sécurité de l'opération électronique.

De préférence, la donnée d'authentification est un cryptogramme de sécurité, par exemple un cryptogramme de paiement.

Dans un mode de réalisation de l'invention, la deuxième application 2 réalise une conversion de la première donnée 11 entre la lecture 202 et la vérification 203.

Dans un mode de réalisation de l'invention, la condition prédéfinie est une condition temporelle. Elle peut par exemple être que l'intervalle temporel entre la première sélection 101 de la première application 1 et la sélection 201 de la deuxième application 2 soit plus grand qu'une durée prédéterminée, par exemple une heure.

Lorsque la première sélection 101 de la première application 1 a lieu lors d'une entrée dans une entité, la condition temporelle peut être que la première sélection 101 de la première application 1 ait été suivie dans le temps par une deuxième sélection de la première application 1, cette deuxième sélection ayant eu lieu lors d'une sortie de l'entité.

Dans un mode de réalisation de l'invention, lorsque la première donnée 11 ne satisfait pas à la condition prédéfinie, la contremesure prise 205 par la deuxième application 2 comprend que la deuxième application 2 bloque l'opération électronique.

Dans un mode de réalisation de l'invention, lorsque la première donnée 11 ne satisfait pas à la condition prédéfinie, la contremesure prise 205 par la deuxième application 2 comprend que la deuxième application 2 détermine une information de sécurité et l'envoie à l'entité de vérification 5, préférentiellement via le lecteur 4. L'information de sécurité permet d'alerter l'entité de vérification 5 qui peut alors éventuellement bloquer l'opération électronique.

Dans un mode de réalisation de l'invention, si la sélection 201 de la deuxième application a lieu grâce à une technologie de communication sans contact avec le lecteur 4, la contremesure 205 peut être de forcer l'opération électronique à avoir lieu avec un contact avec le lecteur 4.

Dans un mode de réalisation de l'invention, lors de l'étape de lecture 202, la deuxième application 2 va chercher la première donnée 11 dans les moyens d'enregistrements 31, par exemple dans le premier espace mémoire. Cela peut se faire par exemple via une méthode de communication de type "pull" depuis la deuxième application 2 vers la première application 1.

Dans un mode de réalisation de l'invention, suite à l'étape d'écriture 102, la première application 1 notifie la deuxième application 2 qu'il y a une modification de la première donnée 11. Cela peut se faire par exemple via une méthode de communication de type "push" depuis la première application 1 vers la deuxième application 2. Il est par exemple possible que la deuxième application 2 s'enregistre auprès de la première application 1 pour indiquer qu'elle désire être notifiée des modifications de la première donnée 11. Cet enregistrement se fait avant la réalisation du procédé selon l'invention, par exemple lorsque l'utilisateur personnifie son élément sécurisé 2. Il est aussi possible que la première application 1 comporte une instruction lui indiquant de notifier la deuxième application 2 des modifications de la première donnée 11.

Dans un mode de réalisation de l'invention, la première application 1 a un premier espace mémoire qui lui est dédié dans les moyens d'enregistrement 31, stockant par exemple ses instructions 41 et ses données 51; et la deuxième application 2 a un deuxième espace mémoire qui lui est dédié dans les moyens d'enregistrement 31, stockant par exemple ses instructions 42 et ses données 52. Un exemple d'un tel mode de réalisation est illustré à la figure 3. Lorsque la première application 1 écrit 102 la première donnée 11 dans les moyens d'enregistrement 31, elle l'écrit de préférence dans le premier espace mémoire. Lorsque la deuxième application 2 lit 202 la première donnée 11 dans les moyens d'enregistrement 31, elle la lit de préférence dans le premier espace mémoire. Cela peut se faire par exemple via une méthode de communication de type "pull" depuis la deuxième application 2 vers la première application 1.

Dans un mode de réalisation de l'invention, l'architecture d'applications sur l'élément sécurisé 3 est de type "système de fichiers ISO 7816". Un fichier maître (master file) comprend alors un fichier répertoire (directory file) pour les données 51 de la première application 1 et un fichier répertoire (directory file) pour les données 52 de la deuxième application. Chacun des fichiers répertoires comprend une pluralité de fichiers élémentaires (elementary files). De préférence, lors de la lecture 202 de la première donnée 11, la deuxième application 2 interroge le fichier répertoire pour les données 51 de la première application 1, par exemple sur base de la position supposée de la première donnée 11. Cette position peut par exemple être spécifiée par au moins un de: un identifiant du fichier répertoire contenant la première donnée 11, un identifiant du fichier élémentaire contenant la première donnée 11, un offset qui indique le nombre de bytes depuis le début du fichier, une longueur qui indique le nombre de bytes de la première donnée 11. La lecture 202 de la première donnée 11 peut se faire par des API connues de l'homme du métier, par exemple via une commande select ou read record.

Dans un mode de réalisation de l'invention, l'architecture d'applications sur l'élément sécurisé 3 est de type "plateforme JAVA". La première application 1 est une première applet et la deuxième application 2 est une deuxième applet. Chaque applet a un espace mémoire dédié. Par exemple, un premier espace mémoire dédié à la première application 1 comprend une première pluralité de fichiers élémentaires et un deuxième espace mémoire dédié à la deuxième application 2 comprend une deuxième pluralité de fichiers élémentaires. De préférence, l'écriture 102 de la première donnée 11 par la première application 1 et/ou la lecture 202 de la première donnée 11 par la deuxième application 2 est réalisée par un mécanisme de shareable interface. Selon une première approche, la première application 1 a un rôle de serveur et propose l'accès via shareable interface au premier espace mémoire à la deuxième application 2 qui a un rôle de client. Selon une deuxième approche, la première application 1 a un rôle de serveur de données et propose l'accès via shareable interface au premier espace mémoire à la deuxième application 2 qui a un rôle de client. Pour lire 202 la première donnée 11, la deuxième application 2 fait une requête auprès de ce serveur de données. Selon une troisième approche, la première application 1 a un rôle de serveur d'événements et notifie la deuxième application 2 de toute modification dans la première donnée 11.

Un premier exemple d'une application d'un mode de réalisation de l'invention est le suivant. L'utilisateur de l'élément sécurisé 3 entre dans un réseau de bus et utilise son élément sécurisé 3 pour pointer son entrée dans le réseau. Ce pointage d'entrée engendre une sélection 101 de la première application 1. La première application 1 écrit le temps de sa première sélection 101 dans le premier espace mémoire. Ce temps, qui est le moment du pointage d'entrée, est la première donnée 11. Dans l'heure qui suit le pointage d'entrée, alors que l'utilisateur est dans le bus, un malfrat s'approche de lui et cherche à réaliser une opération électronique de paiement sans contact avec l'élément sécurisé 3. Cela engendre la sélection 201 de la deuxième application 2. La deuxième application 2 lit la première donnée 11 dans le premier espace mémoire et vérifie 203 la condition prédéfinie. La deuxième application 2 voit alors que la différence temporelle entre la sélection 201 de la deuxième application 2 et la première sélection 101 de la première application 1 est plus petite qu'une heure: la condition prédéfinie n'est pas satisfaite. La deuxième application 2 prend 205 alors une contremesure en exigeant que l'opération électronique de paiement se fasse par contact. Il est alors impossible au malfrat de faire le paiement à l'insu de l'utilisateur de l'élément sécurisé 3.

Un deuxième exemple d'une application d'un mode de réalisation de l'invention est le suivant. L'utilisateur de l'élément sécurisé 3 se connecte grâce à son élément sécurisé 3 à une session d'une entité qui est un site internet gouvernemental. La connexion se fait via un lecteur 4 connecté à un ordinateur. Cette connexion engendre une première sélection 101 de la première application 1 qui est une application d'identification. La première application 1 écrit "entrée" dans le premier espace mémoire comme valeur de la première donnée 11. Alors que l'utilisateur est encore sur sa session, un malfrat cherche à effectuer une opération électronique de paiement avec l'élément sécurisé 3. Cela engendre la sélection 201 de la deuxième application 2. La deuxième application 2 lit la première donnée 11 dans le premier espace mémoire et vérifie 203 la condition prédéfinie. La condition prédéfinie est que première sélection 101 de la première application 1 ait été suivie dans le temps d'une deuxième sélection de la première application 1, cette deuxième sélection étant liée à une sortie de l'entité, c'est-à-dire à une déconnexion de la session. Cette condition prédéfinie n'est pas satisfaite car la première donnée est égale à "entrée". La deuxième application 2 prend 205 alors une contremesure en interdisant toute opération électronique de paiement tant que la session est ouverte. Il est alors impossible au malfrat de faire le paiement à l'insu de l'utilisateur de l'élément sécurisé 3 alors que la session est ouverte. Si l'utilisateur déconnecte sa session sur l'entité, cela engendre une deuxième sélection de la première application 1 qui écrit alors "sortie" dans le premier espace mémoire comme valeur de la première donnée 11. L'utilisateur peut alors utiliser la deuxième application normalement.

Un troisième exemple d'une application d'un mode de réalisation de l'invention est le suivant. L'utilisateur de l'élément sécurisé 3 se connecte grâce à son élément sécurisé 3 à une session d'une entité qui est un portail informatique de son environnement professionnel. La connexion se fait via un lecteur 4 connecté à un ordinateur. Cette connexion engendre une première sélection 101 de la première application 1 qui est une application d'identification. La première application 1 écrit le temps de sa première sélection 101 dans le premier espace mémoire comme valeur de la première donnée 11. Il est peu probable que le même élément sécurisé soit utilisé immédiatement la première sélection 101 de la première application 1 pour un paiement légitime. Dans les dix minutes qui suivent la première sélection 101 de la première application 1, un malfrat cherche à effectuer une opération électronique de paiement avec l'élément sécurisé 3. Cela engendre la sélection 201 de la deuxième application 2. La deuxième application 2 lit la première donnée 11 dans le premier espace mémoire et vérifie 203 la condition prédéfinie. La deuxième application 2 voit alors que la différence temporelle entre la sélection 201 de la deuxième application 2 et la première sélection 101 de la première application 1 est plus petite que quinze minutes: la condition prédéfinie n'est pas satisfaite. La deuxième application 2 prend 205 alors une contremesure en interdisant l'opération électronique. Il est alors impossible au malfrat de faire le paiement.

En d'autres termes, l'invention se rapporte à un procédé pour aider à améliorer la sécurité d'une opération électronique réalisée via un élément sécurisé 3. Le procédé comprend les étapes suivantes. Une première application 1 de l'élément sécurisé 3 est sélectionnée 101 et écrit 102 une donnée de contexte 11 dans des moyens d'enregistrement 31 de l'élément sécurisé 3. Ensuite, une deuxième application 2 est sélectionnée 201, lit la donnée de contexte 11 dans les moyens d'enregistrement 31 et vérifie 203 si la donnée de contexte 11 satisfait à une condition prédéfinie. Si oui, il est considéré que le contexte de la sélection 201 de la deuxième application 2 est légitime et l'opération électronique peut se poursuivre normalement.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Procédé pour aider à améliorer la sécurité d'une opération électronique, ledit procédé étant mis en oeuvre par un élément sécurisé (3) comprenant des moyens d'enregistrement (31) stockant des instructions pour l'exécution d'une première application (1) et d'une deuxième application (2) différente de la première application (1), ledit procédé comprenant les étapes successives suivantes:
(a) une première sélection (101) de la première application (1),
(b) une écriture (102), par la première application (1), d'une première donnée (11) dans lesdits moyens d'enregistrement (31),
(c) une sélection (201) de la deuxième application (2),
(d) une lecture (202), par la deuxième application (2), de ladite première donnée (11) dans lesdits moyens d'enregistrement (31),
(e) une vérification (203), par la deuxième application (2), que ladite première donnée (11) satisfait à une condition prédéfinie, et
(f) si ladite première donnée (11) satisfait à ladite condition prédéfinie, une réalisation (204), par la deuxième application (2), de ladite opération électronique qui comprend la génération d'une donnée d'authentification à partir d'une clé stockée dans lesdits moyens d'enregistrement (31).

2. Procédé selon la revendication 1, dans lequel ladite condition prédéfinie est une condition temporelle.

3. Procédé selon la revendication précédente, dans lequel ladite condition prédéfinie est que l'intervalle temporel entre la première sélection (101) de la première application (1) et la sélection (201) de la deuxième application (2) soit plus grand qu'une durée prédéterminée.

4. Procédé selon la revendication 2, dans lequel la première sélection (101) de la première application (1) est liée à une opération électronique correspondant à une entrée dans une entité, et ladite condition prédéfinie est que ladite première sélection (101) de la première application (1) ait été suivie dans le temps d'une deuxième sélection de la première application (1) qui est liée à une opération électronique correspondant à une sortie de ladite entité.

5. Procédé selon l'une quelconque des revendications précédentes, dans lequel si, lors de l'étape (e), ladite première donnée (11) ne satisfait pas à ladite condition prédéfinie, la deuxième application (2) détermine une information de sécurité et l'envoie à un deuxième dispositif électronique (5).

6. Procédé selon l'une quelconque des revendications précédentes, dans lequel la sélection (201) de la deuxième application (2) est réalisée par une technologie de communication sans contact, par exemple une technologie de communication en champ proche.

7. Procédé selon la revendication précédente, dans lequel, si, lors de l'étape (e), ladite première donnée (11) ne satisfait pas à ladite condition prédéfinie, la deuxième application (2) force ladite opération électronique à être effectuée via une technologie de communication avec contact.

8. Procédé selon l'une quelconque des revendications précédentes, dans lequel un premier espace mémoire desdits moyens d'enregistrement (31) correspond à la première application (1), une deuxième espace mémoire desdits moyens d'enregistrement (31), différent du premier espace mémoire, correspond à la deuxième application (2), et lorsque la deuxième application (2) lit (202) ladite première donnée (11) lors de l'étape (d), elle la lit dans le premier espace mémoire.

9. Procédé selon la revendication précédente, dans lequel le premier espace mémoire est un fichier répertoire de la première application (1) et le deuxième espace mémoire est un fichier répertoire de la deuxième application (2).

10. Procédé selon la revendication 8, dans lequel la première application (1) est une première applet, la deuxième application (2) est une deuxième applet, le premier espace mémoire est dédié à la première applet et le deuxième espace mémoire est dédié à la deuxième applet.

11. Procédé selon l'une quelconque des revendications précédentes, dans lequel la première application (1) est une application pour l'accès à un réseau de transports en commun.

12. Procédé selon la revendication précédente, dans lequel l'étape (b) est déclenchée par un pointage d'entrée dans ledit réseau de transport en commun.

13. Procédé selon la revendication précédente, dans lequel ledit pointage d'entrée résulte en une ouverture d'un portique d'entrée.

14. Procédé selon l'une quelconque des revendications 1 à 10, dans lequel la première application (1) est une application d'identification.

15. Procédé selon l'une quelconque des revendications précédentes, dans lequel la deuxième application (2) est une application de paiement électronique.

16. Procédé selon la revendication précédente, dans lequel la génération d'une donnée d'authentification comprend une détermination d'un cryptogramme de paiement.

17. Procédé selon l'une quelconque des revendications précédentes, dans lequel l'élément sécurisé (3) est compris dans une carte à puce ou un téléphone portable.

18. Elément sécurisé (3) comprenant des moyens d'exécution informatique pour mettre en oeuvre le procédé selon l'une quelconque des revendications 1 à 17.

19. Programme informatique comprenant des instructions pour l'exécution des étapes du procédé selon l'une quelconque des revendications 1 à 17 lorsque ledit programme informatique est exécuté par un élément sécurisé (3).

20. Support d'enregistrement lisible par des moyens d'exécution informatique et sur lequel sont enregistrées des instructions pour l'exécution des étapes du procédé selon l'une quelconque des revendications 1 à 17.
